# EUROPEAN PATENT SPECIFICATION

(11) **EP 3 220 784 B1**
(45) Date of publication and mention of the grant of the patent: **16.05.2018**
(21) Application number: 15784042.2
(22) Date of filing: 21.10.2015
(51) Int. Cl.: A47J 31/06

(54) **MACHINE, METHOD AND SYSTEM FOR BREWING A BEVERAGE**
VERFAHREN, VORRICHTUNG UND SYSTEM ZUM BRÜHEN VON GETRÄNKEN
PROCÉDÉ, MACHINE ET SYSTÈME DE BRASSAGE D'UNE BOISSON

(30) Priority: 18.11.2014 EP 14193663
(43) Date of publication of application: 27.09.2017
(73) Proprietor: Unilever PLC, London, Greater London EC4Y 0DY (GB); Unilever NV, 3013 AL Rotterdam (NL)
(72) Inventor: CROSS, David, Murray, Letchworth Hertfordshire SG6 2AR (GB); TOLFTS, Robert, David, Ely Cambridgeshire CB6 3UW (GB)
(74) Representative: Keenan, Robert Daniel
(86) International application number: PCT/EP2015/074413
(87) International publication number: WO 2016/078858

(56) References cited:
- EP-A1- 2 781 174
- US-A- 5 619 904
- US-A1- 2009 317 526

## Description

### Field of the invention

The present invention relates to methods and machines for preparing beverages. In particular, the invention relates to preparation of infused beverages that are brewed in a machine having an infusion chamber.

### Background of the invention

Beverages such as tea and coffee are usually prepared in the home using ground coffee, tea bags or loose-leaf tea. However, the long brewing time and mess after brewing are inconvenient.

Machines for automatically brewing beverages are known. In particular, automatic capsule-based brewing devices have been developed. Often such machines dispense the beverage in a jet or stream which is not reminiscent of pouring of beverages in traditional beverage preparation. Also such jets and streams may cause unwanted foaming or even splashing of the beverage on dispensing.

WO 2014/006050 A (Unilever) discloses a method of preparing a tea beverage in a capsule-based brewing device wherein the device comprises an infusion chamber; a capsule holder sized and shaped so as to receive a capsule; a filter; an openable and closable passage which terminates in an orifice; a vessel located beneath the orifice and having a spout. The method comprises the steps of introducing liquid and infusible beverage material from the capsule into the infusion chamber so as to brew the beverage; and then after brewing has taken place for a sufficient time, opening the passage to allow the beverage to flow from the infusion chamber through the filter, along the passage, through the orifice, into the vessel and out from the spout. Flow of beverage via the vessel and spout allows for improved dispensing of the beverage.

Whilst the method and machine disclosed in WO 2014/006050 A present significant improvements over prior methods and machines, the present inventors have recognized that there is a need to provide methods and machines which have further improved dispensing properties.

EP 2781174 discloses an automatic beverage machine which has a control system for opening a passage to allow brewed beverage to flow from an infusion chamber to a dispensing orifice.

US 2009/317526 discloses a coffee machine for dispensing coffee which has brewed by passing water through a filter comprising loose coffee using a valve which is pulsed between being either fully open or fully closed.

US 5,619,904 discloses a tea machine comprising a steeping chamber mounted above a tea pot. The steeping chamber comprises a valve to allow tea to descent into the the tea pot below. The action of the valve is controllable by hand by means of a control arm connected to the valve.

### Summary of the invention

In a first aspect, the present invention is directed to a machine for preparing a beverage, preferably an automated capsule-based brewing machine, according to claim 1. In a second aspect, the present invention is directed to a method for preparing a beverage in a machine, according to claim 14. Decreasing the flow resistance of the passage during dispensing allows for improved flow of the beverage from the machine, for example by providing a smoother, slower and/or more even flow from the machine. In particular decreasing the flow resistance of the passage during dispensing is desirable as the flow at the start of dispensing can be especially strong and/or uneven where the flow is gravity driven. Under gravity feed there is a larger head of liquid at the start of dispensing which provides a high pressure difference across the passage and which leads to faster flow rates than at later times in dispensing if the flow resistance of the passage is constant.

Thus the machine is preferably arranged so that there is a head of continuous beverage above the passage before the dispensing begins. This means a head of liquid which may contain infusible beverage material dispersed within. The head of liquid may be greater than 5cm. A cake of stationary infusion material above the passage which acts as a filter bed for the brewing water naturally controls the flow of beverage, and therefore careful control of the flow resistance across the passage is of greatly reduced significance in this arrangement.

The flow resistance can conveniently be decreased during dispensing in a manner wherein for at least a period of 1 second of the dispensing time the flow resistance is greater than the flow resistance at a later period in the dispensing time. Preferably the period in which the flow resistance is greater is at least 1.5 seconds, most preferably from 2 to 5 seconds.

Preferably the flow resistance is decreased from a high initial value at the start of the dispensing time and to a minimum value at the end of the dispensing time, the flow resistance reducing gradually and/or in steps throughout substantially all of the dispensing time.

Additionally or alternatively the flow resistance may be progressively decreased in a plurality of discrete stages (for example 2 to 5 stages), wherein in each stage the flow resistance is maintained at a constant value. Preferably in each stage the flow resistance is maintained at a constant value for a period of at least 0.5 seconds, more preferably for a period of from 1 to 5 seconds.

The total dispensing time (time from when beverage begins to flow from the dispensing orifice to when flow from the orifice ceases) is preferably at least 4 seconds, more preferably at least 5 seconds, more preferably still at least 6 seconds and most preferably from 7 to 20 seconds.

Preferably the flow resistance is only decreased or kept the same throughout the duration of the dispensing time, i.e. there is no increase in the flow resistance during the dispensing time.

An especially convenient means for decreasing the flow resistance comprises progressively opening a valve. For example, flow resistance may be progressively decreased in a plurality of discrete stages (for example 2 to 5 stages) wherein in each stage the valve is held in a constant state of opening before being moved to a more opened position. Preferably in each stage the valve is maintained in a constant state for a period of at least 0.5 seconds, more preferably for a period of from 1 to 5 seconds.

In a preferred embodiment the passage terminates in a plurality of dispensing orifices. Dispensing through a plurality of orifices is found to provide a smoother flow and reduce splashing. More preferably there are 3 to 7 dispensing orifices, most preferably 4, 5 or 6 orifices.

The control system is preferably electronically operated, typically in an automated manner without the need for user intervention. Preferably the control system comprises a pre-programmed procedure for controlling the reduction in flow resistance (e.g. opening a valve).

In one embodiment the beverage is not dispensed directly from the dispensing orifice into a drinking receptacle but instead the beverage is dispensed from the dispensing orifice to a vessel located beneath the orifice. Particularly preferred dispensing arrangements comprising such a vessel are described, for example, in WO 2014/006050 A, the disclosure of which is hereby incorporated by reference in its entirety.

Preferably the method comprises dispensing the beverage from the dispensing orifice to a vessel located beneath the orifice and wherein the beverage is dispensed from the orifice and falls through free space to the vessel. Additionally or alternatively the vessel comprises a spout and the beverage then flows out of the spout. The present invention is particularly advantageous wherein the spout is an open spout, as the flow resistance of an open spout is very low and so if the flow resistance is not controlled earlier along the flow path (i.e. in the passage) then the flow from the open spout can be unacceptably fast and/or sudden.

Typically the vessel comprises a base having a peripheral sidewall. In dispensing machines made for domestic use (e.g. on a kitchen worktop), the height of the machine cannot be too great otherwise it can be unsuitable for many kitchens which comprise cupboards spaced above the worktops. As a result it may be necessary to limit the vertical height of the peripheral sidewall of the vessel. Thus preferably the vessel is a tray. In some embodiments the vessel may have no sidewall and be in the form of a plate. The present invention is also well suited to such a configuration as restricting the flow at certain times during dispensing can be used as a means to prevent sudden flooding of the tray or plate during dispensing.

To avoid interference of beverage material with the flow resistance of the passage, it is preferred that the brewed beverage flows through a filter during dispensing, more preferably the beverage flows through the filter prior to entering the passage.

The infusible beverage material is preferably introduced to the infusion chamber from a capsule. The capsule is preferably received by a capsule holder. Preferably the passage is located in the capsule holder, more preferably in a base of the holder. Preferably the brewed beverage flows through a filter in the capsule holder prior to flowing along the passage and out through the dispensing orifice.

In a third aspect, the present invention is directed to a capsule-based brewing system comprising the machine of any embodiment of the second aspect and a capsule containing infusible beverage material.

All aspects of the present invention are particularly suitable for brewing tea-based beverages.

All other aspects of the present invention will more readily become apparent upon considering the detailed description which follows.

### Detailed description

As used herein the term "beverage" refers to a substantially aqueous drinkable composition suitable for human consumption. Preferably the beverage comprises at least 85 percent water by weight of the beverage, more preferably at least 90 percent and most preferably from 95 to 99.9 percent. The term "infusible beverage material" refers to tea plant material, herb plant material, fruit pieces and / or flower material (e.g. petals), which when steeped or soaked in an aqueous liquid release certain soluble substances into the liquid, e.g. flavour and/or aroma molecules. The term 'tea' refers to leaf and / or stem material from *Camellia sinensis* var. *sinensis* or *Camellia sinensis* var. *assamica.* It also includes rooibos obtained from *Aspalathus linearis.* 'Tea' is also intended to include the product of blending two or more of any of these teas. The tea material may be substantially fermented i.e. black tea, semi-fermented i.e. oolong tea, or substantially unfermented i.e. green tea. The term "herb plant material" refers to material which is commonly used as a precursor for herbal infusions. Preferably the herb plant material is selected from chamomile, cinnamon, elderflower, ginger, hibiscus, jasmine, lavender, lemongrass, mint, rosehip, vanilla and verbena. The tea material may additionally comprise fruit pieces (e.g. apple, blackcurrant, mango, peach, pineapple, raspberry, strawberry etc). The tea material can be flavoured and/or spiced, e.g. with bergamot, citrus peel and the like. The infusible beverage material is preferably material other than coffee material. Preferably the infusible beverage material is dried and has a moisture content of less than 30 wt percent, more preferably less than 20 wt percent and most preferably from 0.1 to 10 wt percent. Preferably the infusible beverage material is in the form of particles which have a size (i.e. longest diameter) of from about 2 to about 10 mm, preferably 3 to 7 mm.

The beverage preferably comprises at least 0.01 percent by weight tea solids. More preferably the beverage comprises from 0.04 to 3 percent, even more preferably from 0.06 to 2 percent, most preferably from 0.1 to 1 percent by weight tea solids.

The term 'brewing' refers to the addition of a liquid, particularly hot water, to an infusible beverage material thereby to form a beverage. Brewing may be carried out at any temperature, but preferably in the range of 80 to 95 degrees centigrade

The term "infusion chamber" means a vessel in which infusion of infusible beverage material takes place, and which is large enough both to allow the beverage material to move around in the liquid during infusion, and also to contain a substantial part, at least 50 percent of the volume of the final beverage. The term "infusion chamber" therefore does not refer to capsules inside which brewing takes place (as is typically the case in coffee machines).

The term "spout" means an element which channels and directs the flow of a liquid, so that the flow of the liquid on leaving the spout has a horizontal component, i.e. it does not flow in a purely vertical downwards direction. Preferably the spout is a projecting tube or gutter, more preferably the spout is an open spout such as a gutter.

The term "capsule" includes cartridges, pods, and packages etc., e.g. a rigid or semirigid container in which infusible beverage material is or may be packaged. Preferably the capsule comprises a body part and a lid part, the lid part being attached to the body part so as to enclose the infusible beverage material within the capsule. The lid may be made of a thin film, such as foil.

As used herein "flow resistance of the passage" refers to the ability of the passage to restrict the flow of a liquid. Differences in flow resistance can be determined by comparing the flow rate of a Newtonian fluid at a set temperature and at a fixed pressure drop along the passage. For example if the orifice is open to atmospheric pressure then differences in flow resistance can be determined by measuring the flow rate of water out of the orifice when a constant water pressure is maintained at the entrance to the passage.

The present invention will now be described with reference to the figures, wherein:
Figure 1 shows a brewing machine according to an embodiment of the invention.
Figure 2 is a schematic diagram showing the functional main components of the brewing machine of Figure 1.
Figure 3 shows an embodiment of a capsule holder for use in the present invention and containing a capsule.
Figure 4 shows the capsule holder of Figure 3 in exploded view.
Figure 5 shows a cross-sectional view of the receptacle of the capsule holder of Figures 3 and 4 wherein the drain valve is in various states of opening.

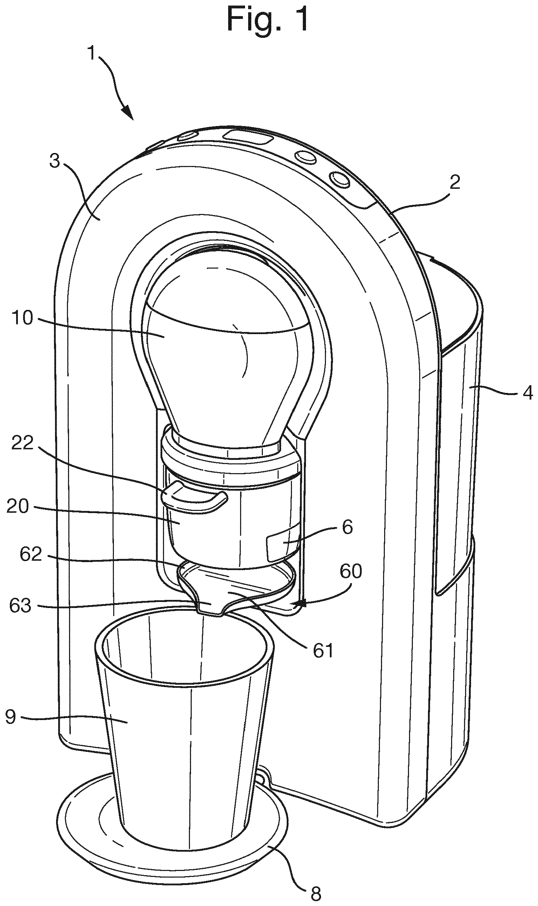

Figure 1 shows a brewing machine (1) according to the invention. The machine (1) has a casing (2) with a front side (3) and a rear side (4). An infusion chamber (10) is supported and held in place by a manifold (not shown). A water reservoir, heater, and pump (not shown) are located inside the rear (4) of the casing.

The machine has a capsule holder (20) sized and shaped so as to receive a capsule containing infusible beverage material (not shown). The capsule holder (20) is shown in position for brewing, wherein the top of the capsule holder is in water-tight contact with the bottom of the infusion chamber (10). The capsule holder is located in a support (6) and preferably has a handle (22).

Below the capsule holder (20) there is a vessel (60) which has a spout (63). At the bottom of the front side (3) of the casing there is a plate (8) on which a cup or similar drinking container (9) is placed when the beverage is dispensed.

In the context of the present invention the term "vessel" refers to any object which provides a surface for the beverage to be dispensed onto. In the embodiment shown in Figure 1, the vessel (60) consists of a flat base (61) having a sidewall (62) around its edge, apart from at the front where there is a spout (63). The vessel could be a cup, a tray, a pipe, a plate or any other suitable object. The vessel could be an integral part of the machine, for example part of the casing (2), or a separate object (as in the embodiment shown in Figure 1).

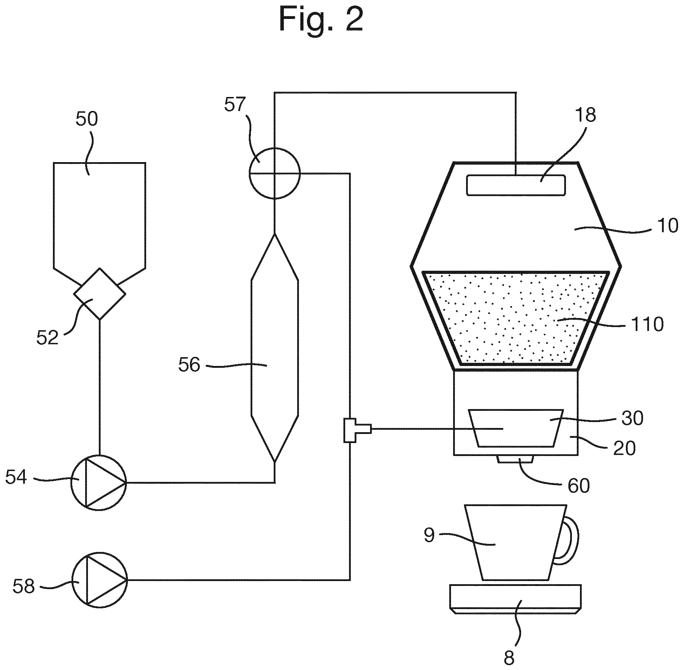

Figure 2 is a schematic diagram showing the main functional components of the machine. Water from the reservoir (50) is fed to the infusion chamber (10) via a water filter (52), a water pump (54), a heater (56) and a valve (57). The capsule holder (20) holds a capsule (30). Beneath the capsule holder (20) there is the vessel (60), and the cup (9) which rests on the plate (8). The valve (57) controls the route the water takes between the heater (56) and the infusion chamber (10). Firstly the water is pumped to the infusion chamber (10) via the capsule (30), in order to brew a beverage (110). Subsequently, the valve (57) can re-direct the water such that it enters the brewing chamber (10) via a rinse head (18) in order to rinse and/or clean the brewing chamber (10). There is also an air pump (58) which can pump air to the infusion chamber (10), preferably via the capsule holder (20).

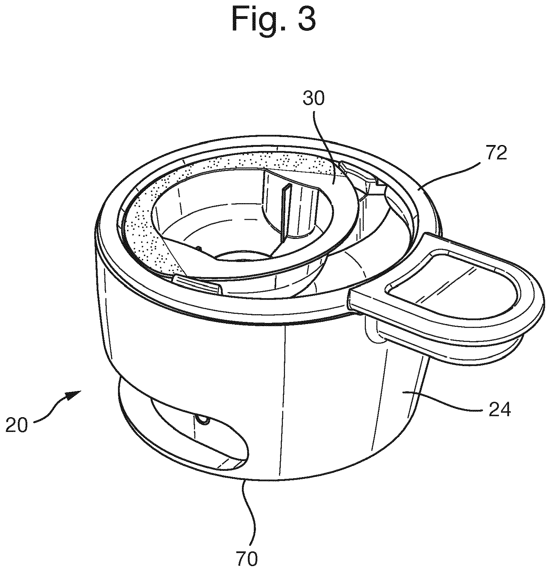

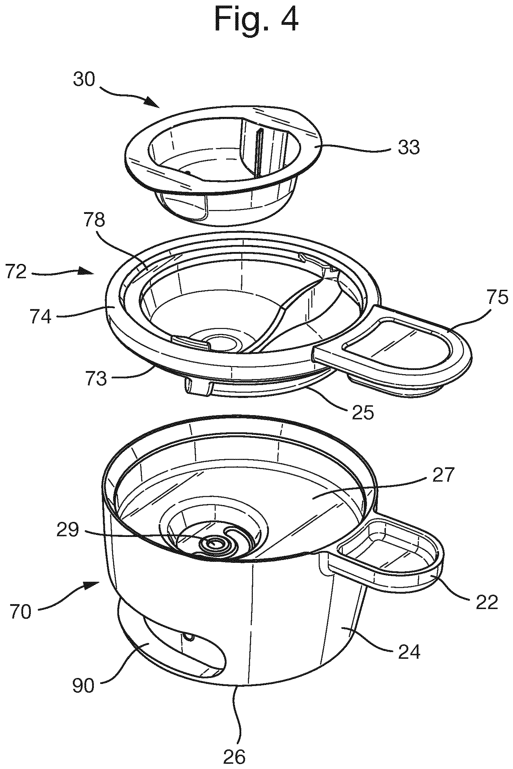

Figures 3 and 4 show one embodiment of a capsule holder (20) removed from the machine, in a perspective view and exploded view respectively. In the embodiment shown, the capsule holder (20) consists of two separable parts, a receptacle (70) and a strainer (72).

The receptacle (70) has a sidewall (24), a base (26) and a platform (27) which forms a floor of the receptacle. Located in the platform (27) is the entrance to a passage (29) through which the beverage flows during dispensing and which is closed by a drain valve (not shown) during brewing. The receptacle (70) has a handle (22). The receptacle also comprises a cut-out section which forms a socket (90) for locating the holder (20) on the support (6) of the machine (see Figure 1).

The strainer (72) has a base (73), a rim (74) and a handle (75). In the embodiment shown in Figures 3 and 4, the strainer comprises a shelf (78) just below the rim (74). The shelf (78) extends around part of the sidewall. The capsule (30) has a flange (33) which corresponds to the shape of the shelf (78), so that the flange rests on the shelf along substantially all of one side of the capsule, and thus is supported by it. The width of the shelf preferably matches the width of the flange, and is preferably at least 3 mm wide.

At least part of the base (73) of the strainer is made up of a filter (25). In the preferred embodiment shown, the part of the base (73) which is located underneath the capsule is solid whilst the rest of the base consists of the filter. The solid part may also serve to support the capsule. The filter preferably consists of a fine mesh made, for example, of stainless steel, nylon, polyester or PTFE. The mesh size must be sufficiently small to catch small pieces of infusible material but large enough to ensure that draining is not too slow. Preferably, the mesh size is from 100 to 500 microns, more preferably 150 to 300 microns.

As shown in Figure 3, in use the strainer (72) rests on the receptacle (70) and is supported by the sidewall (24). The strainer covers the whole of the top of the receptacle (70), so that liquid cannot pass between the rim (74) of the strainer and the sidewall (24) of the receptacle, and hence can only enter the receptacle (70) by passing through the filter (25). The filter (25) prevents spent infusible material (such as tea leaves) from entering the receptacle (70).

Preferably the handle (75) of the strainer is larger than and overlaps the handle (22) of the receptacle. When the strainer is located in the receptacle, the handle (75) of the strainer sits on top of handle (22) of the receptacle, as shown in Figure 3. This allows the receptacle and strainer to be picked up together, by gripping them from above and below. Nonetheless, the strainer can be easily removed from the receptacle by gripping the edges of its handle (75) where it extends beyond the handle (22) of the receptacle.

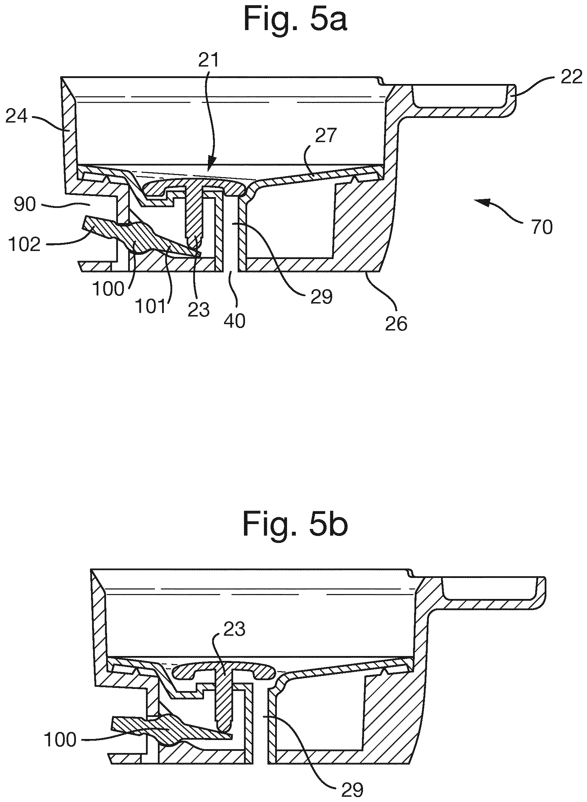

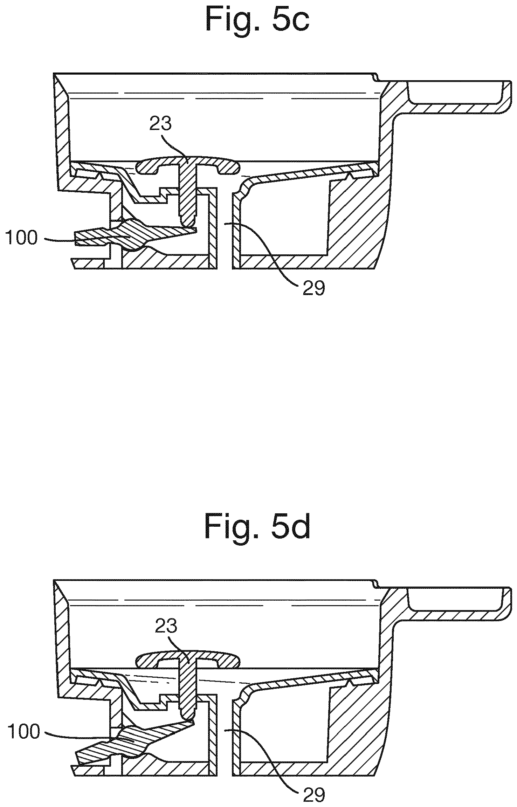

Figure 5 shows the receptacle (70) of the capsule holder (20) in cross-section. For clarity neither the strainer (72) nor capsule (30) are shown in Figure 5 although these would be present in use and located as shown in Figure 3.

In the lower part of the capsule holder is the openable and closable passage (29) through which the beverage flows during dispensing and which is closed by a drain valve (21) in the platform (27) during brewing and which terminates in an orifice (40). In one embodiment, the passage may terminate in a plurality of orifices, more preferably from 3 to 7, most preferably 4, 5 or 6 orifices.

The drain valve (21) comprises a plunger (23) and a valve seat at the entrance to the passage (29) in the platform (27). The base of the plunger (23) rests on an inner paddle (101) of an actuator (100). The actuator (100) extends from the inner paddle (101) through the side wall (24) of the receptacle (70) and terminates in an outer paddle (102) located in the socket (90) of the receptacle. The actuator (100) is pivotable about a central point between the two paddles (101,102) such that when the outer paddle (102) is pushed in a downward direction, the inner paddle (101) is urged in an upward direction and carries the plunger (23) of the drain valve (21) with it. Figures 5(b) to (d) show the valve (21) in a progressively open state. If the downward force is removed from the outer paddle (102) a resilient member such as a spring (not shown) forces the plunger (23) downward and returns the valve and actuator (100) to the closed position shown in Figure 5(a).

In use, the machine functions as follows. The user places a capsule (30) containing infusible beverage material in the capsule holder (20). The capsule holder (20) is then located on the support (6). The support (6) then moves to place the holder (20) in communication with the infusion chamber (10) to form a water-tight contact, so that the capsule holder and infusion chamber together form a container in which the brewing liquid can be held while brewing takes place.

The capsule may have a lid, which needs to be opened or removed in order to release the beverage material. In one embodiment, the lid is removed by the user before the capsule is inserted into the machine. Alternatively, the lid is opened automatically by the machine after the capsule is inserted into the capsule holder. The machine may have means for recognizing a capsule and / or reading information from a code on the capsule.

The machine (1) may also have means for allowing the user to adjust the parameters of the brewing operation, such as the brewing time, the cup size etc. The means may suitably consist of buttons or other inputs on the machine, together with a control system.

Water is pumped from the reservoir (50) to the heater (56), which is preferably a flow-though heater. The resulting hot water (and optionally steam) is then pumped to the capsule (30), for example through a needle. The influx of hot water pushes the infusible beverage material out from the opened capsule (30) into the infusion chamber (10). The heater (56) and pump (54) are controlled so that the target brew temperature (which is typically in the range 80 degrees centigrade to 95 degrees C) is achieved in the infusion chamber. Typically the water flow rate is in the range of 200 to 400 ml/min, and the volume of water is 150 to 300 ml, depending on the desired size of the beverage. The brewing time, which typically ranges from 10 to 120 seconds, is preferably set by user input and / or information read from the capsule.

Once brewing has taken place for the required time the drain valve (21) is opened, allowing the beverage to drain from the infusion chamber. Preferably the opening of the drain valve is controlled automatically by the machine. For example the support (6) may comprise a flag and cam (not shown) which is moved by a dedicated drain motor in the machine and which provides the actuator (100) with the required downward force on its outer paddle (102). The extent to which the drain valve (21) is opened during dispensing is varied such that the resistance of flow of the beverage through the passage (29) decreases during dispensing.

For example, once the brewing time is reached the drain motor is started for a short time (typically less than 1 s) which is sufficient to slightly lift the plunger (23) from the valve seat. In this position brewed beverage can flow into the passage (29) but meets a large flow resistance owing to the narrow gap at the passage (29) entrance as shown in Figure 5(b). The head of liquid in the chamber (10) is relatively high at this point and so if the flow was not restricted the beverage would be dispensed at a very fast rate, which we have found may even startle some consumers. The beverage is allowed to drain through the slightly opened valve for a few (typically 2) seconds and then the motor started again for a fraction of a second. This is sufficient to further lift the plunger (23) to the position shown in Figure 5(c). The beverage is allowed to drain for a further 2 s before the motor started again until the drain valve (21) is fully opened as shown in Figure 5(d). In this fully opened state an acceptable flow rate is maintained even as the head of beverage in the infusion chamber (10) becomes low.

Using such a staggered opening as described above allows beverage to flow at a relatively constant rate onto the vessel (6) and out through the spout (63) even though the head of brewed beverage decreases throughout the dispensing time. Furthermore flooding of the vessel (60) is avoided even though the vessel (60) is a tray and so has a low sidewall (62). For example the sidewall (62) may be less than 3 cm high, more preferably less than 2 cm, more preferably still less than 1 cm, and most preferably from 0.05 to 0.5 cm. A lower sidewall height is preferred as this allows the total height of the machine to be reduced. In a preferred embodiment the vessel has no sidewall and is in the form of a plate.

During dispensing the beverage flows from the infusion chamber through the filter (25). Infusible beverage material is prevented from entering the passage (29) by the filter (25). The beverage then flows through the passage (29), out through the orifice(s) (40), into the vessel (60) and finally pours through the spout (63) into a cup (9) which the user has already placed onto the plate (8). Thus, rather than being dispensed vertically downwards into the cup, the beverage follows an arc, similar to that of tea poured from the spout of a tea pot. This emphasizes the "tea-ness" of the beverage, as distinct from coffee making machines. In the embodiment shown in Figure 1, there is no direct connection between the vessel (60) and the orifice (40). Thus the beverage is dispensed from the orifice (40) and falls through free space, onto the vessel (60) and out via the spout (63) so that the consumer sees the tea pouring in an arc into the cup. Finally, after the beverage has been dispensed, the user removes the used capsule and spent tea leaves. The free space beneath the capsule holder (20) makes it easy to remove the capsule holder after brewing, so that the used capsule (30) can be disposed of. Similarly this space facilitates insertion of the capsule holder with a new capsule before brewing. In contrast, if the bottom of the capsule holder (20) were in close proximity to the vessel (60), it would be less straightforward to remove and insert the capsule holder.

All numbers in this description indicating amounts of material, time periods, length scales, conditions of reaction, physical properties of materials and/or use may optionally be understood as modified by the word "about".

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

## Claims

1. A machine (1) for preparing a beverage, preferably an automated capsule-based brewing machine, wherein the machine comprises:
• an infusion chamber (10) ;
• a liquid supply for introducing liquid into the infusion chamber;
• a device for introducing infusible beverage material into the infusion chamber;
• an openable and closable passage (29) for dispensing brewed beverage from the infusion chamber to a dispensing orifice; and
• an automated control system for opening the passage (29) to allow brewed beverage to flow under force of gravity from the infusion chamber, through the passage and to the orifice for a dispensing time, **characterized in that** the automated control system is configured to decrease the flow resistance of the passage during the dispensing time wherein the flow resistance is decreased from a high initial value at the start of the dispensing time and to a minimum value at the end of the dispensing time, the automated control system being further configured such that the flow resistance reduces gradually and/or in steps throughout substantially all of the dispensing time.

2. The machine as claimed in claim 1 wherein the control system is configured to provide that for at least a period of 1 second of the dispensing time the flow resistance is greater than the flow resistance at a later period in the dispensing time.

3. The machine as claimed in claim 2 wherein the control system comprises a valve and is configured to decrease the flow resistance by progressively opening the valve during the dispensing time.

4. The machine as claimed in claim 2 or claim 3 wherein the machine comprises a vessel located beneath the dispensing orifice.

5. The machine as claimed in claim 4 wherein the vessel is separated from the orifice by free space.

6. The machine as claimed in claim 4 or claim 5 wherein the vessel comprises a spout, preferably an open spout.

7. The machine as claimed in any one of claims 4 to 6 wherein the vessel is a tray with a base and a peripheral sidewall, the peripheral sidewall having a height of less than 3 cm.

8. The machine as claimed in any one of claims 4 to 6 wherein the vessel is a plate.

9. The machine as claimed in any one of the preceding claims wherein the machine comprises a filter arranged to filter the beverage during dispensing, preferably arranged to allow beverage to flow through the filter prior to entering the passage.

10. The machine as claimed in any one of the preceding claims wherein the device for introducing infusible material into the infusion chamber comprises a capsule holder sized and shaped to receive a capsule.

11. The machine as claimed in claim 10 wherein the passage is located in the capsule holder, preferably in a base of the holder.

12. The machine as claimed in any one of the preceding claims wherein the passage dispenses brewed beverage to a plurality of dispensing orifices.

13. A capsule-based brewing system comprising the machine as claimed in any one of the preceding claims and a capsule containing infusible beverage material.

14. A method for preparing a beverage in a machine, preferably an automated capsule-based brewing machine, wherein the method comprises the steps of:
a) introducing liquid and infusible beverage material into an infusion chamber of the machine so as to brew the beverage; and then
b) opening a passage in the machine for a dispensing time to allow the brewed beverage to flow under force of gravity from the infusion chamber to a dispensing orifice;
wherein in step (b) the flow resistance of the passage is decreased during the dispensing time wherein the flow resistance is decreased from a high initial value at the start of the dispensing time and to a minimum value at the end of the dispensing time, the flow resistance reducing gradually and/or in steps throughout substantially all of the dispensing time.

15. The method as claimed in claim 14 for preparing a beverage in the machine as claimed in any one of claims 1 to 12.

16. Machine, system or method as claimed in any one of the preceding claims wherein the beverage is a tea beverage.

## Patentansprüche

1. Maschine (1) zum Zubereiten eines Getränks, vorzugsweise eine automatische Brühmaschine auf Kapselbasis, wobei die Maschine Folgendes umfasst:
• eine Aufgusskammer (10);
• eine Flüssigkeitszufuhr zum Zuführen von Flüssigkeit in die Aufgusskammer;
• eine Vorrichtung zum Zuführen eines nicht auflösbaren Getränkematerials in die Aufgusskammer;
• einen Durchgang (29), der geöffnet und geschlossen werden kann, zum Ausgeben eines gebrühten Getränks von der Aufgusskammer zu einer Ausgabeöffnung; und
• ein automatisches Steuerungssystem zum Öffnen des Durchgangs (29), damit das gebrühte Getränk während eines Ausgabezeitraums durch die Schwerkraft von der Aufgusskammer durch den Durchgang und zu der Öffnung strömen kann, **dadurch gekennzeichnet, dass** das automatische Steuerungssystem so konfiguriert ist, dass es den Strömungswiderstand des Durchgangs während des Ausgabezeitraums verringert, wobei der Strömungswiderstand von einem hohen Anfangswert beim Start des Ausgabezeitraums zu einem minimalen Wert am Ende des Ausgabezeitraums verringert wird, wobei das automatische Steuerungssystem ferner so konfiguriert ist, dass sich der Strömungswiderstand im Wesentlichen während des gesamten Ausgabezeitraums allmählich und/oder stufenweise verringert.

2. Maschine nach Anspruch 1, wobei das Steuerungssystem konfiguriert ist, dafür zu sorgen, dass wenigstens für eine Zeitspanne von 1 Sekunde des Ausgabezeitraums der Strömungswiderstand größer als der Strömungswiderstand in einer späteren Zeitspanne während des Ausgabezeitraums ist.

3. Maschine nach Anspruch 2, wobei das Steuerungssystem ein Ventil umfasst und konfiguriert ist, den Strömungswiderstand durch schrittweises Öffnen des Ventils während des Ausgabezeitraums zu verringern.

4. Maschine nach Anspruch 2 oder Anspruch 3, wobei die Maschine einen Behälter umfasst, der sich unter der Ausgabeöffnung befindet.

5. Maschine nach Anspruch 4, wobei der Behälter durch einen freien Zwischenraum von der Öffnung getrennt ist.

6. Maschine nach Anspruch 4 oder Anspruch 5, wobei der Behälter einen Ausguss, vorzugsweise einen offenen Ausguss umfasst.

7. Maschine nach einem der Ansprüche 4 bis 6, wobei der Behälter ein Einsatz mit einer Basis und einer Seitenwand in Umfangsrichtung ist, wobei die Seitenwand in Umfangsrichtung eine Höhe von weniger als 3 cm aufweist.

8. Maschine nach einem der Ansprüche 4 bis 6, wobei der Behälter ein Teller ist.

9. Maschine nach einem der vorhergehenden Ansprüche, wobei die Maschine einen Filter umfasst, der dafür ausgelegt ist, das Getränk während der Ausgabe zu filtern, und vorzugsweise so ausgelegt ist, dass das Getränk durch den Filter strömen kann, bevor es in den Durchgang eintritt.

10. Maschine nach einem der vorhergehenden Ansprüche, wobei die Vorrichtung zum Zuführen von nicht auflösbarem Material in die Aufgusskammer eine Kapselhalterung umfasst, die so bemessen und geformt ist, dass sie eine Kapsel aufnimmt.

11. Maschine nach Anspruch 10, wobei sich der Durchgang in der Kapselhalterung, vorzugsweise in einer Basis der Halterung befindet.

12. Maschine nach einem der vorhergehenden Ansprüche, wobei der Durchgang ein gebrühtes Getränk an mehrere Ausgabeöffnungen ausgibt.

13. Brühsystem auf Kapselbasis, das die Maschine nach einem der vorhergehenden Ansprüche und eine Kapsel, die nicht auflösbares Material für ein Getränk enthält, umfasst.

14. Verfahren zum Zubereiten eines Getränks in einer Maschine, vorzugsweise einer automatischen Brühmaschine auf Kapselbasis, wobei das Verfahren die folgenden Schritte umfasst:
a) Zuführen einer Flüssigkeit und eines nicht auflösbaren Materials für ein Getränk in eine Aufgusskammer der Maschine, um so das Getränk zu brühen; und dann
b) Öffnen eines Durchgangs in der Maschine für einen Ausgabezeitraum, damit das gebrühte Getränk durch die Schwerkraft von der Aufgusskammer zu einer Ausgabeöffnung strömen kann;
wobei im Schritt (b) der Strömungswiderstand des Durchgangs während des Ausgabezeitraums verringert wird, wobei der Strömungswiderstand von einem hohen Anfangswert am Beginn des Ausgabezeitraums zu einem minimalen Wert am Ende des Ausgabezeitraums verringert wird, wobei der Strömungswiderstand im Wesentlichen während des gesamten Ausgabezeitraums allmählich und/oder stufenweise verringert wird.

15. Verfahren nach Anspruch 14 zum Zubereiten eines Getränks in der Maschine nach einem der Ansprüche 1 bis 12.

16. Maschine, System oder Verfahren nach einem der vorhergehenden Ansprüche, wobei das Getränk ein Teegetränk ist.

## Revendications

1. Machine (1) pour préparer une boisson, de préférence une machine d'infusion à base de capsule automatisée, où la machine comprend :
▪ une chambre d'infusion (10) ;
▪ une alimentation liquide pour introduire du liquide dans la chambre d'infusion ;
▪ un dispositif pour introduire un matériau de boisson pouvant infuser dans la chambre d'infusion ;
▪ un passage pouvant être ouvert et fermé (29) pour distribuer de la boisson infusée à partir de la chambre d'infusion vers un orifice de distribution ; et
▪ un système de contrôle automatisé pour ouvrir le passage (29) pour permettre à de la boisson infusée de s'écouler sous la force de gravité à partir de la chambre d'infusion, à travers le passage et vers l'orifice pendant une durée de distribution, **caractérisée en ce que** le système de contrôle automatisé est configuré pour abaisser la résistance à l'écoulement du passage pendant la durée de distribution où la résistance à l'écoulement est abaissée à partir d'une valeur initiale élevée au début de la durée de distribution et jusqu'à une valeur minimale à la fin de la durée de distribution, le système de contrôle automatisé étant de plus configuré de telle sorte que la résistance à l'écoulement diminue progressivement et/ou en étapes tout au long de toute la durée de distribution.

2. Machine selon la revendication 1, où le système de contrôle est configuré pour que pendant au moins une période de 1 seconde de la durée de distribution la résistance à l'écoulement est supérieure à la résistance à l'écoulement dans la période ultérieure dans la durée de distribution.

3. Machine selon la revendication 2, où le système de contrôle comprend une vanne et est configuré pour abaisser la résistance à l'écoulement en ouvrant progressivement la vanne pendant la durée de distribution.

4. Machine selon la revendication 2 ou la revendication 3, où la machine comprend une cuve disposée sous l'orifice de distribution.

5. Machine selon la revendication 4, où la cuve est séparée de l'orifice par un espace libre.

6. Machine selon la revendication 4 ou la revendication 5, où la cuve comprend un bec, de préférence un bec ouvert.

7. Machine selon l'une quelconque des revendications 4 à 6, où la cuve est un plateau avec une base et une paroi latérale périphérique, la paroi latérale périphérique ayant une hauteur inférieure à 3 cm.

8. Machine selon l'une quelconque des revendications 4 à 6, où la cuve est une plaque.

9. Machine selon l'une quelconque des revendications précédentes, où la machine comprend un filtre disposé pour filtrer la boisson pendant la distribution, de préférence disposé pour permettre à la boisson de s'écouler à travers le filtre avant d'entrer dans le passage.

10. Machine selon l'une quelconque des revendications précédentes, où le dispositif pour introduire un matériau pouvant infuser dans la chambre d'infusion comprend un support de capsule dimensionné et façonné pour recevoir une capsule.

11. Machine selon la revendication 10, où le passage est disposé dans le support de capsule, de préférence dans une base du support.

12. Machine selon l'une quelconque des revendications précédentes, où le passage distribue de la boisson infusée à plusieurs orifices de distribution.

13. Système d'infusion à base de capsule comprenant la machine selon l'une quelconque des revendications précédentes et une capsule contenant un matériau de boisson pouvant être infusé.

14. Procédé de préparation d'une boisson dans une machine, de préférence une machine d'infusion à base de capsule automatisée, où le procédé comprend les étapes de :
a) introduction de liquide et de matériau de boisson pouvant être infusé dans une chambre d'infusion de la machine afin d'infuser la boisson ; et puis
b) ouverture d'un passage dans la machine pendant une durée de distribution pour permettre à la boisson infusée de s'écouler sous la force de gravité à partir de la chambre d'infusion vers un orifice de distribution ;
où dans l'étape (b) la résistance à l'écoulement du passage est abaissée pendant la durée de distribution où la résistance à l'écoulement est abaissée à partir d'une valeur initiale élevée au début de la durée de distribution et jusqu'à une valeur minimale à la fin de la durée de distribution, la résistance à l'écoulement diminuant progressivement et/ou en étapes tout au long de toute la durée de distribution.

15. Procédé selon la revendication 14 pour la préparation d'une boisson dans la machine selon l'une quelconque des revendications 1 à 12.

16. Machine, système ou procédé selon l'une quelconque des revendications précédentes, où la boisson est une boisson de thé.
